# EUROPEAN PATENT APPLICATION

(11) **EP 4 832 396 A1**
(43) Date of publication of application: **28.10.2026**
(21) Application number: 24907812.2
(22) Date of filing: 19.11.2024
(51) Int. Cl.: H04L 5/00, H04W 72/231, H04W 72/0446

(54) **METHOD PERFORMED BY TERMINAL OR BASE STATION IN WIRELESS COMMUNICATION SYSTEM, AND DEVICE THEREFOR**

(30) Priority: 22.12.2023 US 202363613779 P
(71) Applicant: LG Electronics Inc., Yeongdeungpo-gu Seoul 07336 (KR)
(72) Inventor: PARK, Haewook, Seoul 06772 (KR); KANG, Jiwon, Seoul 06772 (KR)
(74) Representative: Frenkel, Matthias Alexander
(86) International application number: PCT/KR2024/018226
(87) International publication number: WO 2025/135527

(57) **Abstract**

A method performed by a terminal, according to at least one from among embodiments disclosed in the present specification, comprises: receiving a CSI-RS configuration through higher layer signaling; receiving a CSI-RS on the basis of the CSI-RS configuration; and acquiring CSI on the basis of the CSI-RS, wherein the CSI-RS is provided through P antenna ports, P is an integer that is greater than 32 but does not exceed 128, the CSI-RS configuration includes a configuration for a plurality of CSI-RS resources related to the P antenna ports, the configuration for the plurality of CSI-RS resources includes information about a slot offset value of each CSI-RS resource, and the plurality of CSI-RS resources can be mapped, on the basis of the slot offset value, within a time interval corresponding to T slots.

## Description

### TECHNICAL FIELD

The present disclosure relates to a wireless communication system, and more particularly, to a method and apparatus for transmitting and receiving an uplink/downlink signal by a user equipment (UE) or a base station (BS) in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In NR Rel. 15 to 18, transmission of a channel state information-reference signal (CSI-RS) with up to 32 transmission (Tx) ports is supported, and CSI-RS resources may be mapped to even-numbered PRBs or odd-numbered PRBs in the frequency domain, for density reduction.

### DISCLOSURE

### Technical Problem

An object of the present disclosure is to provide a method and device for performing a process of transmitting and receiving a wireless signal more accurately and efficiently. According to an embodiment, a method for transmitting/receiving a channel state information-reference signal (CSI-RS) based on more than 32 ports and a user equipment (UE)/base station (BS) therefor may be provided.

Other objects may be derived from the following description.

### Technical Solution

According to an aspect of the present disclosure, a method performed by a user equipment (UE) may include receiving a channel state information-reference signal (CSI-RS) configuration through higher layer signaling, receiving a CSI-RS based on the CSI-RS configuration, and obtaining CSI based on the CSI-RS. The CSI-RS may be provided through P antenna ports, P may be an integer greater than 32 and not larger than 128, the CSI-RS configuration may include a configuration for a plurality of CSI-RS resources related to the P antenna ports, the configuration for the plurality of CSI-RS resources may include information regarding a slot offset value of each CSI-RS resource, and the plurality of CSI-RS resources may be mapped within a time period corresponding to T slots based on the slot offset value.

The T slots may be two consecutive slots.

P may be 64 or 128.

Each CSI-RS resource may be mapped to one of the two slots based on the slot offset value.

The CSI may be obtained based on an aggregation of CSI-RS resources mapped to a first slot of the two slots and CSI-RS resources mapped to a second slot of the two slots.

The slot offset value may be 0 or 1.

A density of the CSI-RS, which is determined based on the number P of antenna ports, the number of resource elements (REs), and the number of resource blocks (RBs) for the CSI-RS, may be 0.5.

Each of the CSI-RS resources may be mapped to one of an even-numbered physical resource block (PRB) and an odd-numbered PRB in a frequency domain.

A first CSI-RS resource among the plurality of CSI-RS resources may be mapped to an even-numbered PRB of a first slot among the T slots, and a second CSI-RS resource may be mapped to an odd-numbered PRB of a second slot among the T slots.

The UE may not expect the plurality of CSI-RS resources to collide with another signal having a higher priority than the CSI-RS.

The CSI-RS may be an aperiodic CSI-RS.

According to another aspect of the present disclosure, a non-transitory computer-readable recording medium recording instructions for performing the above method may be provided.

According to another aspect of the present disclosure, an apparatus may include a memory storing instructions, and a processor performing operations by executing the instructions. The operations of the processor may include receiving a CSI-RS configuration through higher layer signaling, receiving a CSI-RS based on the CSI-RS configuration, and obtaining CSI based on the CSI-RS. The CSI-RS may be provided through P antenna ports, P may be an integer greater than 32 and not larger than 128, the CSI-RS configuration may include a configuration for a plurality of CSI-RS resources related to the P antenna ports, the configuration for the plurality of CSI-RS resources may include information regarding a slot offset value of each CSI-RS resource, and the plurality of CSI-RS resources may be mapped within a time period corresponding to T slots based on the slot offset value.

The apparatus may further include a transceiver.

The apparatus may be a UE operating in a wireless communication system.

The apparatus may be a processing device configured to control a UE operating in a wireless communication system.

According to another aspect of the present disclosure, a method performed by a base station (BS) may include transmitting a CSI-RS configuration to a UE through higher layer signaling, transmitting a CSI-RS to the UE based on the CSI-RS configuration, and receiving a CSI report from the UE. The CSI-RS may be provided through P antenna ports, P may be an integer greater than 32 and not larger than 128, the CSI-RS configuration may include a configuration for a plurality of CSI-RS resources related to the P antenna ports, the configuration for the plurality of CSI-RS resources may include information regarding a slot offset value of each CSI-RS resource, and the plurality of CSI-RS resources may be mapped within a time period corresponding to T slots based on the slot offset value.

According to another aspect of the present disclosure, a BS may include a memory storing instructions, and a processor performing operations by executing the instructions. The operations of the processor include transmitting a CSI-RS configuration to a UE through higher layer signaling, transmitting a CSI-RS to the UE based on the CSI-RS configuration, and receiving a CSI report from the UE. The CSI-RS may be provided through P antenna ports, P may be an integer greater than 32 and not larger than 128, the CSI-RS configuration may include a configuration for a plurality of CSI-RS resources related to the P antenna ports, the configuration for the plurality of CSI-RS resources may include information regarding a slot offset value of each CSI-RS resource, and the plurality of CSI-RS resources may be mapped within a time period corresponding to T slots based on the slot offset value.

### Advantageous Effects

According to at least one of the disclosed embodiments, a process of transmitting/receiving a wireless signal may be performed accurately and efficiently. According to an embodiment, system throughput may be increased by supporting up to 128 CSI-RS ports, and an overhead increase resulting from an increase in the number of CSI-RS ports may be mitigated by distributively mapping CSI-RS resources across a plurality of aggregated slots in the time domain.

Other effects may be derived from the following description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary PDSCH and acknowledgment/negative acknowledgment (ACK/NACK) transmission process.
FIG. 6 illustrates an exemplary physical uplink shared channel (PUSCH) transmission process.
FIG. 7 illustrates an example of a channel state information (CSI) related procedure.
FIG. 8 illustrates a multi-TRP transmission.
FIG. 9 illustrates channel state information-reference signals (CSI-RSs) mapped based on frequency division multiplexing (FDM)/time division multiplexing (TDM)/code division multiplexing (CDM).
FIG. 10 illustrates CDM-16 patterns according to an embodiment.
FIGS. 11 and 12 illustrate examples of CSI-RS mapping for reducing a time domain density according to an embodiment.
FIGS. 13 to 15 illustrate examples of CSI-RS mapping for reducing a frequency domain density according to an embodiment.
FIGS. 16 and 17 each are diagrams illustrating indexing of CSI-RS ports according to an embodiment.
FIG. 18 illustrates an example of a 32-port CSI-RS configuration.
FIG. 19 illustrates examples of a 64-port CSI-RS configuration and port indexing by aggregating two legacy 32-port CSI-RSs.
FIG. 20 illustrates an exemplary operational procedure between a base station (BS) and a user equipment (UE) according to an embodiment.
FIG. 21 is a flowchart illustrating a method performed by a UE according to an embodiment.
FIG. 22 is a flowchart illustrating a method performed by a BS according to an embodiment.
FIGS. 23 to 26 illustrate a communication system 1 and wireless devices applicable to various embodiments.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

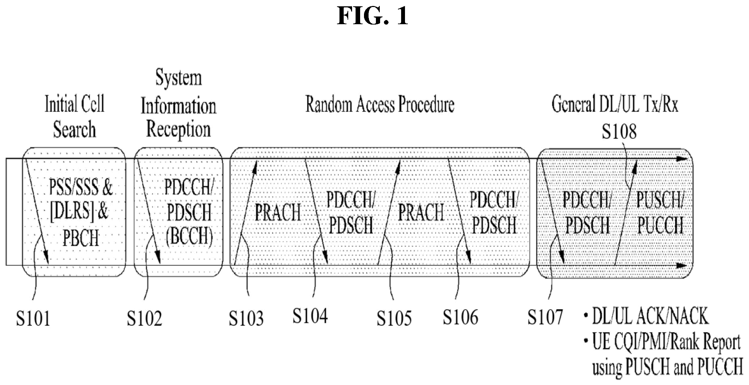

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

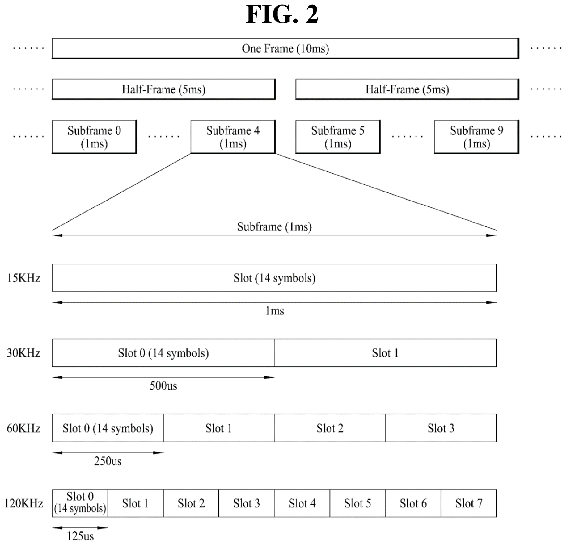

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{µ}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: Number of symbols in a slot * N^{frame,u}ₛₗₒₜ: Number of slots in a frame * N^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

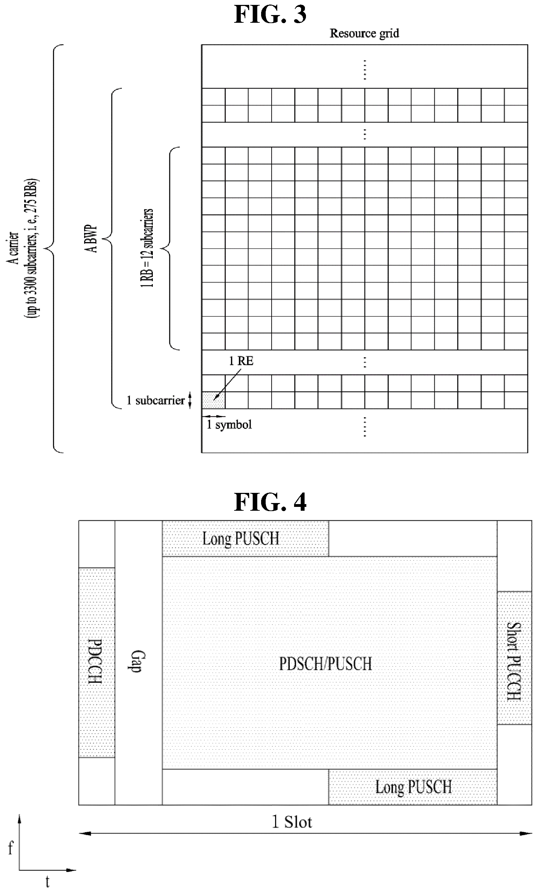

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.
   * An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols *N*^{PUCCH}_{symb} | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

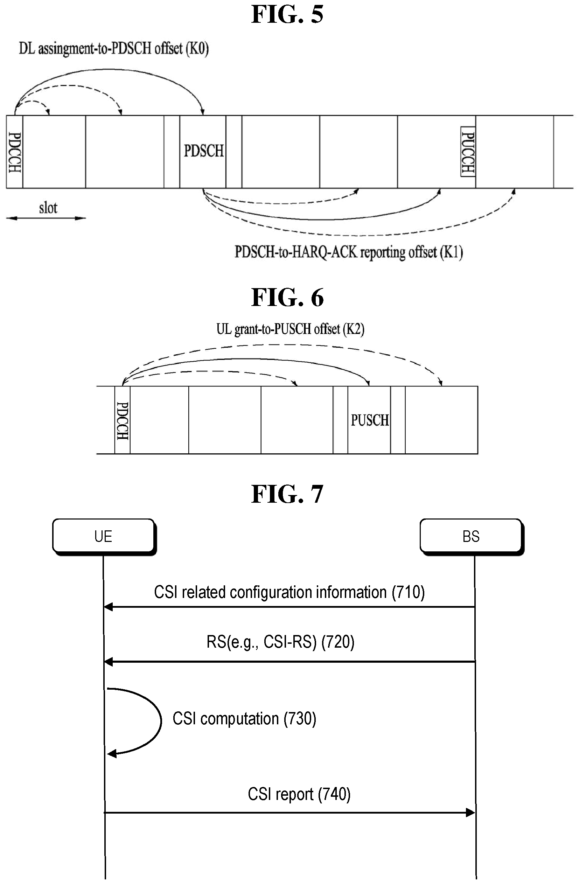

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 6 illustrates an exemplary PUSCH transmission procedure. Referring to FIG. 6, the UE may detect a PDCCH in slot #n. The PDCCH includes DL scheduling information (e.g., DCI format 0_0 or 0_1). DCI format 0_0 or 0_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a medium access control (MAC) control element (CE) indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

### Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of multiple TCI state configurations may be configured for the UE through a higher layer parameter PDSCH-Config. Each TCI state is associated with a QCL configuration parameter between one or two DL reference signals and the DM-RS port of a PDSCH. The QCL may include qcl-Type1 for a first DL RS and qcl-Type2 for a second DL RS. The QCL type may correspond to one of the followings.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

### Operations related to multiple transmission and reception points (M-TRPs)

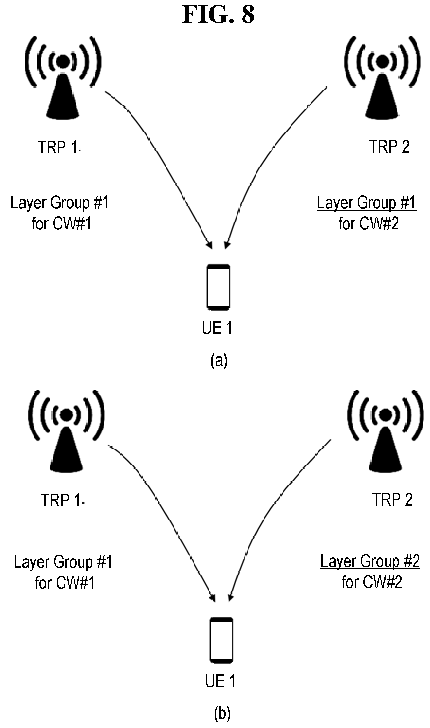

FIG. 8 illustrates multi-TRP (M-TRP) transmission. Referring to FIG. 8-(a), a group of layers transmitting the same codeword (CW) (or TB) correspond to different TRPs. Referring to FIG. 8-(b), different CWs are transmitted through layer groups of different TRPs. In this case, it may be assumed that the TBs corresponding to CW #1 and CW #2 in the drawing are the same. In other words, CW #1 and CW #2 mean that the same TB is converted into different CWs through channel coding, etc., by different TRPs. Therefore, it may be considered as an example of repeated transmission of the same TB. In the case of FIG. 8-(b), there may be a drawback of a higher coding rate corresponding to the TB, compared to FIG. 8-(a). However, FIG. 8-(b) has an advantage that, depending on the channel environment, the coding rate may be adjusted by indicating different values of redundancy version (RV) for encoded bits generated from the same TB, or the modulation order of each CW may be adjusted.

According to the method illustrated in FIGS. 8-(a) and 8-(b), the same TB is repeatedly transmitted through different layer groups. In addition, as each layer group is transmitted by different TRPs/panels, the probability that the UE receives data successfully may increase. This method is referred to as a spatial division multiplexing (SDM) based M-TRP URLLC transmission. The layers belonging to different layer groups are transmitted through DMRS ports that belong to different DMRS code division multiplexing (CDM) groups.

Although the aforementioned M-TRP-related content has been explained based on the SDM method using different layers, it may be extended and applied to an FDM method based on different frequency domain resources (e.g., RB/PRB sets) and/or a TDM method based on different time domain resources (e.g., slots, symbols, sub-symbols, etc.).

### Design of 64 and 128 CSI-RS ports

In Rel-19 NR MIMO or beyond, increasing the number of BS Tx/Rx antenna ports compared to legacy systems (e.g., 32-port Tx) is considered to increase DL/UL system throughput and enable a more flexible MIMO operation. To support this, a 64-port/128-port CSI-RS design is newly required, and the present disclosure provides methods for the same.

Table 6 illustrates the CSI-RS mapping scheme defined in the legacy NR standard (TS 38.211, Rel. 17).

**[Table 6]**

| |
|---|
| When the resource element (*k*, *l*)_{p,u} is within the resource blocks occupied by the CSI-RS resource for which the UE is configured, for each CSI-RS configured, the UE shall assume the sequence r(m) being mapped to resources elements (*k*, *l*)_{p,u} according to: |

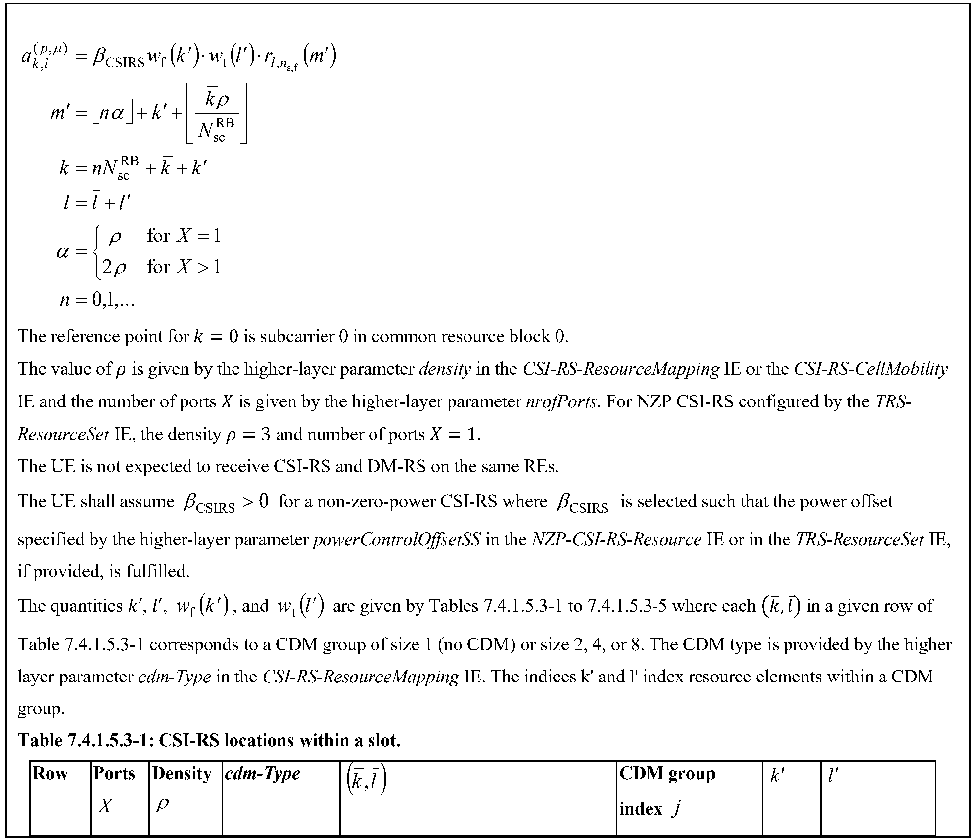

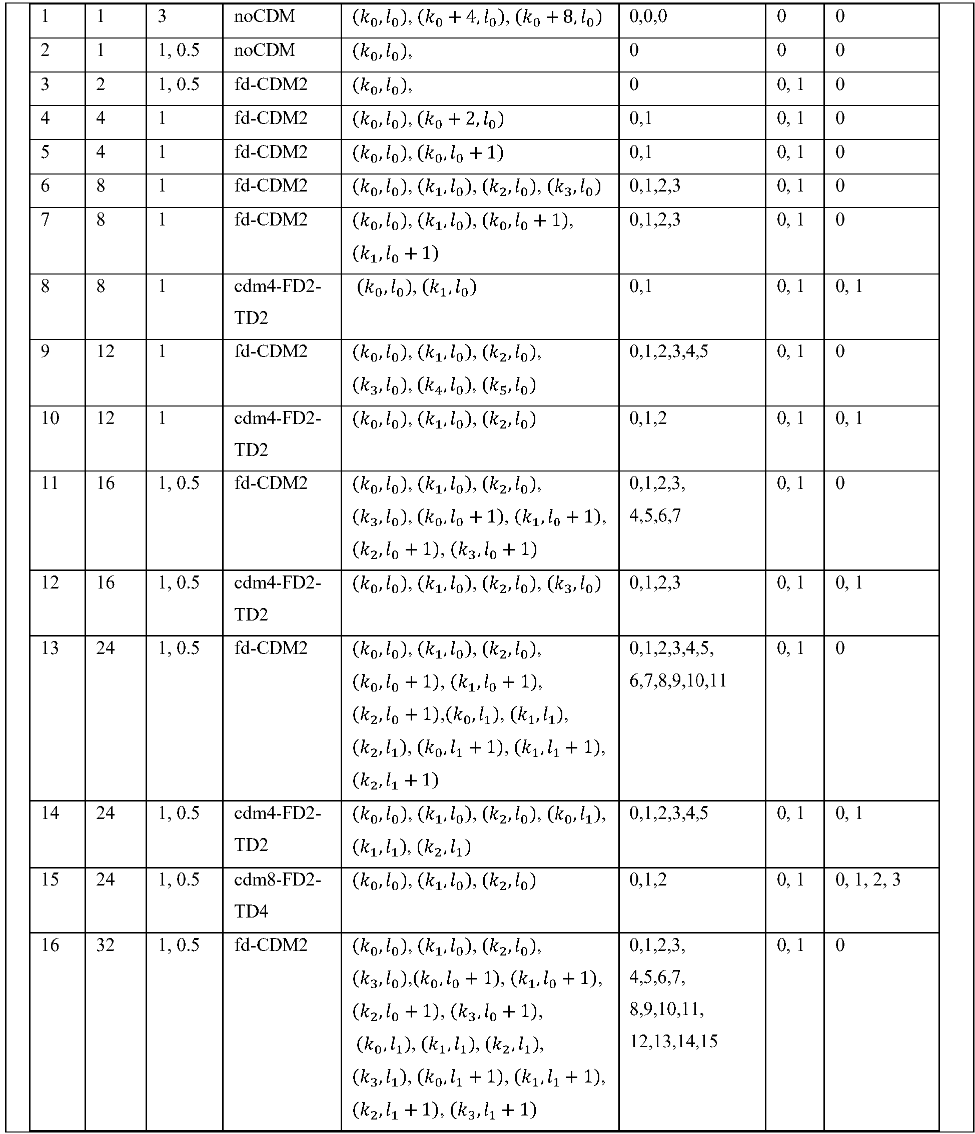

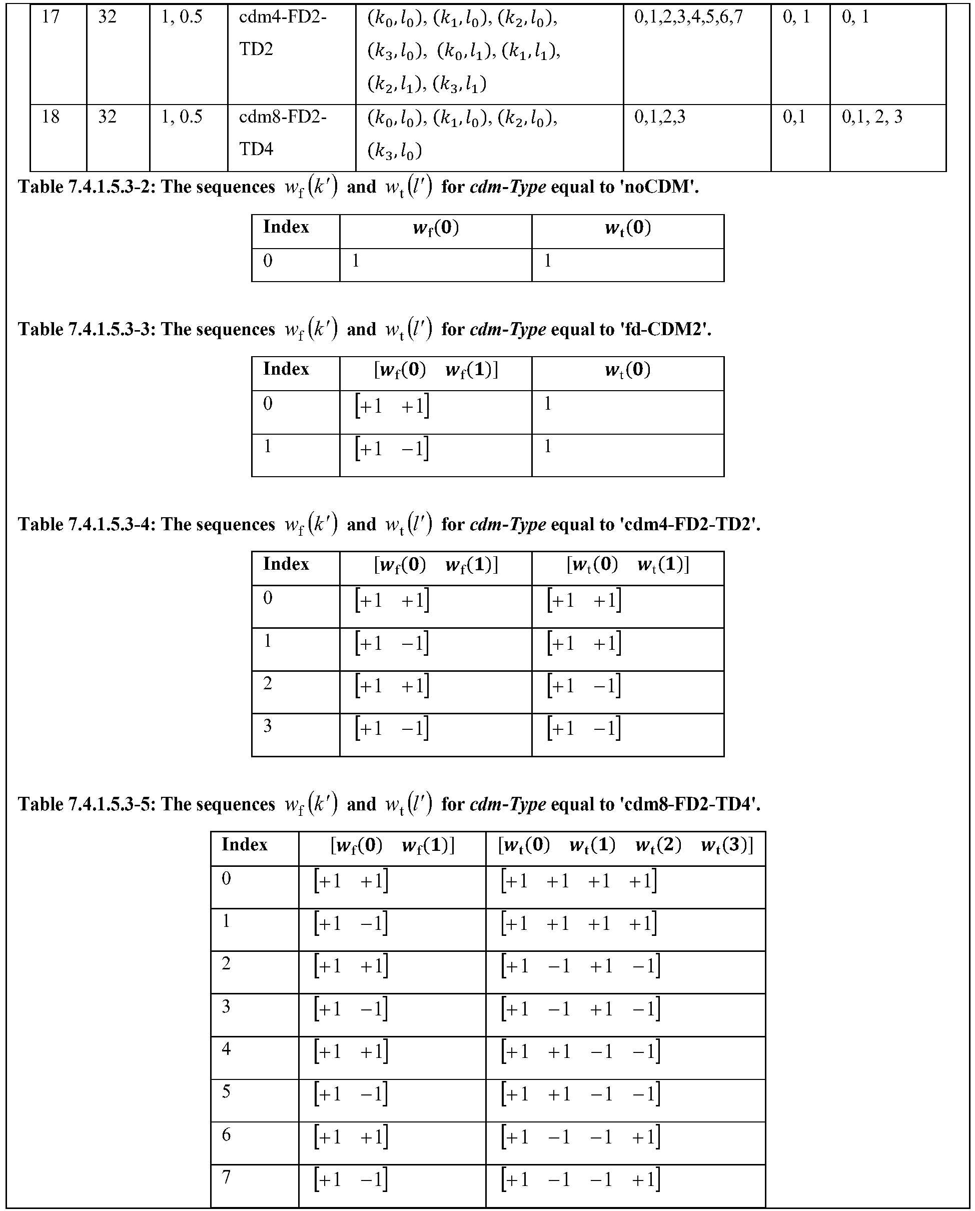

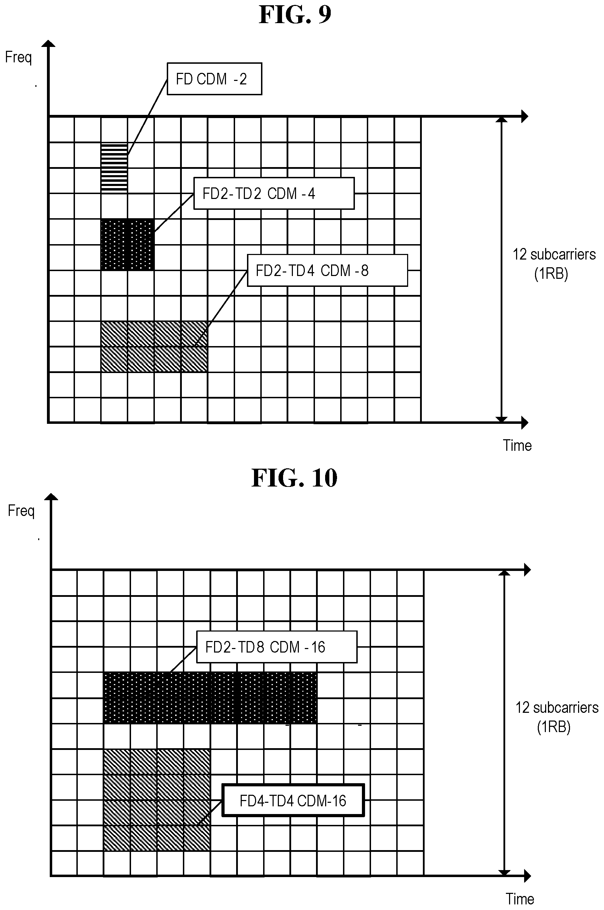

As illustrated in Table 6, an NR CSI-RS is supported based on FDM/TDM/CDM. FIG. 9 illustrates CSI-RSs mapped based on FDM/TDM/CDM in this manner.

Based on the above CSI-RS design, the CSI-RS may be extended to a 64-port/128-port CSI-RS, and for a 64-port/128-port CSI-RS configuration, combinations such as those in Table 7 below may be considered. Table 7 lists the numbers of CDM groups required for extension to 64/128 ports.

**[Table 7]**

| | 64 port CSI-RS | 128 port CSI-RS |
|---|---|---|
| FD CDM-2 | 32 | 64 |
| FD2-TD2 CDM-4 | 16 | 32 |
| FD2-TD4 CDM-8 | 8 | 16 |

The number of configurations that should be configured to support a 64-port CSI-RS and/or a 128-port CSI-RS based on CDM-2 is 32 or 64, resulting in very large signaling overhead, and Table 8 below illustrates embodiments of FD CDM-2, FD2-TD2 CDM-4, and FD2-TD4 CDM-8 configurations for a 64-port CSI-RS.

**[Table 8]**

| Ports X | cdm-Type | (*k̅*,*l̅*) | CDM group index j | k' | l' |
|---|---|---|---|---|---|
| 64 | fd-CDM2 | (*k*₀*, l*₀), (*k*₁*, l*₀), (*k*₂, *l*₀), (*k*₃, *l*₀), | 0,1,2,3, | 0, 1 | 0 |
| | | (*k*₀*, l*₀ + 1)*,* (*k*₁*, l*₀ + 1), (*k*₂, *l*₀ + 1)*,* (*k*₃, *l*₀ + 1), | 4,5,6,7, | | |
| | | (*k*₀*, l*₁), (*k*₁*, l*₁), (*k*₂, *l*₁), (*k*₃, *l*₁), | 8,9,10,11, | | |
| | | (*k*₀*, l*₁ *+* 1)*,* (*k*₁, *l*₁ + 1), (*k*₂*, l*₁ *+* 1), (*k*₃, *l*₁ + 1) | 12,13,14,15, | | |
| | | (*k*₀, *l*₂), (*k*₁*, l*₂), (*k*₂, *l*₂), (*k*₃, *l*₂), | 16, 17, 18, 19, | | |
| | | (*k*₀, *l*₂ *+* 1)*,* (*k*₁*, l*₂ + 1), (*k*₂*, l*₂ *+* 1)*,* (*k*₃*, l*₂ + 1) | 20, 21, 22, 23, | | |
| | | (*k*₀*, l*₃), (*k*₁*, l*₃), (*k*₂, *l*₃), (*k*₃, *l*₃), | 24, 25, 26, 27, | | |
| | | (*k*₀*, l*₃ + 1), (*k*₁, *l*₃ + 1), (*k*₂, *l*₃ + 1), (*k*₃*, l*₃ + 1) | 28, 29, 30, 31 | | |
| 64 | cdm4-FD2-TD2 | (*k*₀, *l*₀), (*k*₁*, l*₀), (*k*₂, *l*₀), (*k*₃*, l*₀), | 0,1,2,3, | 0, 1 | 0, 1 |
| | | (*k*₀*, l*₁)*,* (*k*₁*, l*₁), (*k*₂, *l*₁), (*k*₃, *l*₁) | 4,5,6,7, | | |
| | | (*k*₀, *l*₂), (*k*₁*, l*₂), (*k*₂*, l*₂)*,* (*k*₃*, l*₂) | 8,9,10,11, | | |
| | | (*k*₀*, l*₃),(*k*₁*, l*₃), (*k*₂, *l*₃), (*k*₃, *l*₃) | 12,13,14,15 | | |
| 64 | cdm8-FD2-TD4 | (*k*₀*, l*₀), (*k*₁, *l*₀), (*k*₂, *l*₀), (*k*₃, *l*₀) | 0,1,2,3,4,5,6,7 | 0,1 | 0,1, |
| | | (*k*₀*, l*₁), (*k*₁*, l*₁)*,* (*k*₂*, l*₁), (*k*₃*, l*₁) | | | 2, 3 |

In addition, because transmission power per port may decrease as the number of ports increases in legacy CDM, it is necessary to introduce a larger CDM size to address this. To this end, the following is proposed.

### Proposal 1

To support a 64-port/128-port CSI-RS, a CDM-16 configuration may be applied, and an FD4-TD4 CDM-16 and/or FD2-TD8 CDM-16 configuration may be supported.

FIG. 10 illustrates CDM-16 patterns in Proposal 1. Based on such CDM-16, four CDM-16 groups are required for 64 ports, and eight CDM-16 groups are required for 128 ports. These CDM groups are aggregated to form 64-port and 128-port CSI-RSs. Further, Tables 9 and 10 below illustrate CDM sequences for FD4-TD4 CDM-16 and FD2-TD8 CDM-16, respectively.

**[Table 9]**

| **Index** | **[*w*_{f}(0) *w***_{f}**(1) *w*_{f}**(2) ***w*_{f}**(3)] | **[*w*ₜ(0) *w*ₜ(1) *w*ₜ(2) *w*ₜ(3)]** |
|---|---|---|
| 0 | [+1 +1 +1 +1] | [+1 +1 +1 +1] |
| 1 | [+1 -1 +1 -1] | [+1 +1 +1 +1] |
| 2 | [+1 +1 -1 -1] | [+1 +1 +1 +1] |
| 3 | [+1 -1 -1 +1] | [+1 +1 +1 +1] |
| 4 | [+1 +1 +1 +1] | [+1 -1 +1 -1] |
| 5 | [+1 -1 +1 -1] | [+1 -1 +1 -1] |
| 6 | [+1 +1 -1 -1] | [+1 -1 +1 -1] |
| 7 | [+1 -1 -1 +1] | [+1 -1 +1 -1] |
| 8 | [+1 +1 +1 +1] | [+1 +1 -1 -1] |
| 9 | [+1 -1 +1 -1] | [+1 +1 -1 -1] |
| 10 | [+1 +1 -1 -1] | [+1 +1 -1 -1] |
| 11 | [+1 -1 -1 +1] | [+1 +1 -1 -1] |
| 12 | [+1 +1 +1 +1] | [+1 -1 -1 +1] |
| 13 | [+1 -1 +1 -1] | [+1 -1 -1 +1] |
| 14 | [+1 +1 -1 -1] | [+1 -1 -1 +1] |
| 15 | [+1 -1 -1 +1] | [+1 -1 -1 +1] |

**[Table 10]**

| **Index** | **[*w*_{f}(0) *w*_{f}(1)]** | **[*w*ₜ(0) *w*ₜ(1) *w*ₜ(2) *w*ₜ(3) *w*ₜ(4) *w*ₜ(5) *w*ₜ(6) *w*ₜ(7)]** |
|---|---|---|
| 0 | [+1 +1] | [+1 +1 +1 +1 +1 +1 +1 + 1] |
| 1 | [+1 -1] | [+1 +1 +1 +1 +1 +1 +1 +1] |
| 2 | [+1 +1] | [+1 +1 +1 +1 -1 -1 -1 -1] |
| 3 | [+1 -1] | [+1 +1 +1 +1 -1 -1 -1 -1] |
| 4 | [+1 +1] | [+1 +1 -1 -1 +1 +1 -1 -1] |
| 5 | [+1 -1] | [+1 +1 -1 -1 +1 +1 -1 -1] |
| 6 | [+1 +1] | [+1 +1 -1 -1 -1 -1 +1 +1] |
| 7 | [+1 -1] | [+1 +1 -1 -1 -1 -1 +1 +1] |
| 8 | [+1 +1] | [+1 -1 +1 -1 +1 -1 +1 -1] |
| 9 | [+1 -1] | [+1 -1 +1 -1 +1 -1 +1 -1] |
| 10 | [+1 +1] | [+1 -1 +1 -1 -1 +1 -1 +1] |
| 11 | [+1 -1] | [+1 -1 +1 -1 -1 +1 -1 +1] |
| 12 | [+1 +1] | [+1 -1 -1 +1 +1 -1 -1 +1] |
| 13 | [+1 -1] | [+1 -1 -1 +1 +1 -1 -1 +1] |
| 14 | [+1 +1] | [+1 -1 -1 +1 -1 +1 +1 -1] |
| 15 | [+1 -1] | [+1 -1 -1 +1 -1 +1 +1 -1] |

### Proposal 2

For a 64-port/128-port CSI-RS design, the following time domain/frequency domain density reduction is proposed.

### (1) Option 1. Time domain density reduction

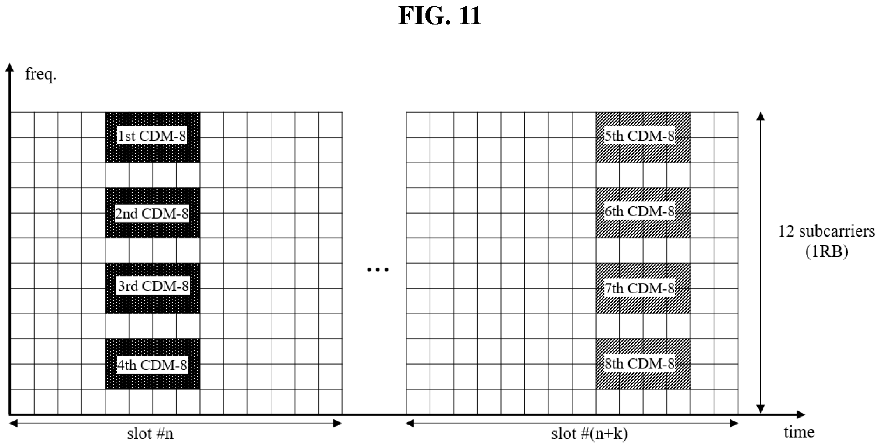

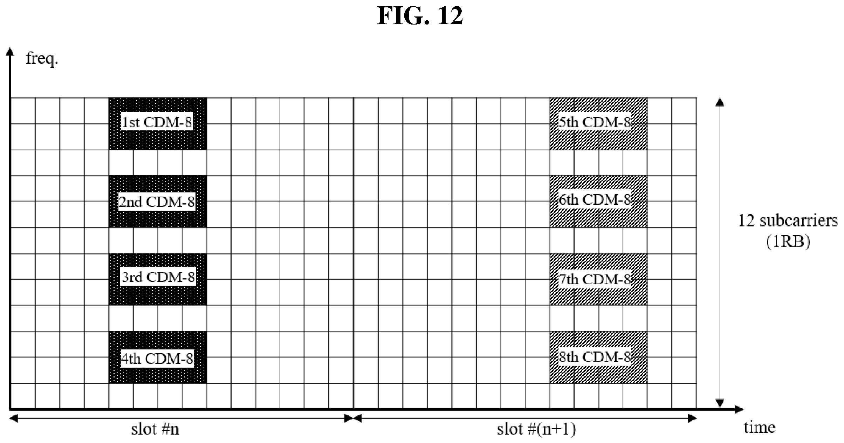

FIGS. 11 and 12 illustrate examples of Option 1 in Proposal 2. FIG. 12 illustrates a case where k=1 is fixed.

Among a plurality of CDM-X groups (e.g., X = 2, 4, 8, or 16) forming a 64-port or 128-port CSI-RS, a first set of Y CDM groups is transmitted in an n^{th} slot, and a second set of Z CDM groups is transmitted in an (n+k)^{th} slot. X*(Y+Z) = P (64 or 128). When X*Y CSI-RSs are transmitted periodically/semi-persistently/aperiodically in the n^{th} slot, X*Z CSI-RSs are transmitted in a k^{th} slot from the n^{th} slot (where k may be RRC-configurable, based on a UE capability, or fixed to a specific value, e.g., k=1). In a special case of the above example, when the number of ports for CSI-RSs transmitted in each slot is the same, it may be configured that Y=Z=64/2 or 128/2 port CSI-RS.

### (2) Option 2. Frequency domain density reduction

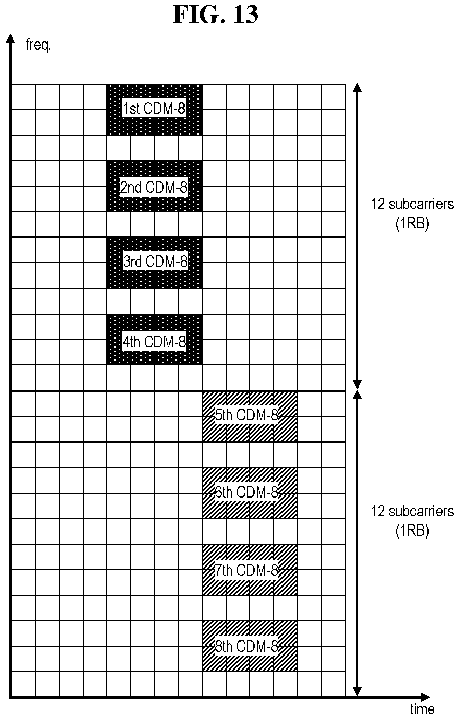

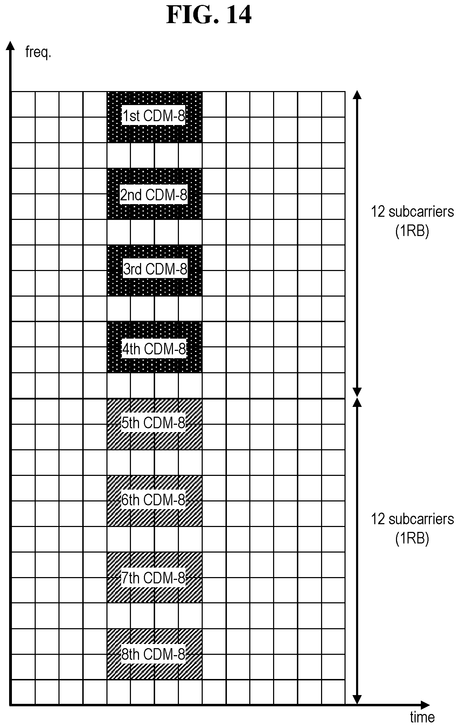

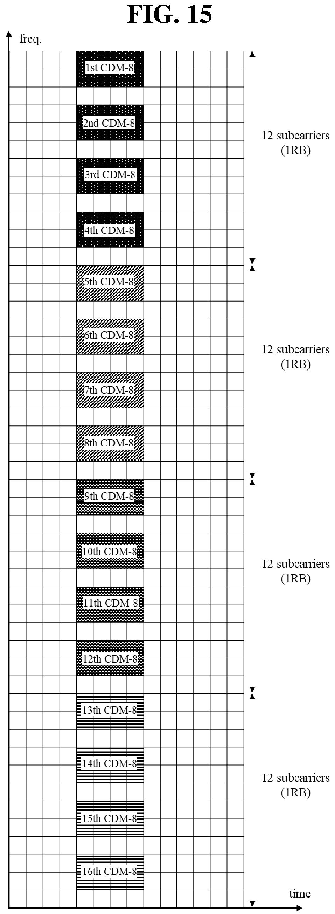

FIGS. 13 to 15 illustrate examples of Option 2 in Proposal 2. Specifically, (i) FIG. 13 illustrates a 64-port CSI-RS as an example of Option 2. (ii) FIG. 14 illustrates a 64-port CSI-RS with a 0.5 CSI-RS density (port/RE/RB) as an example of Option 2. In FIG. 14, the density is 64 ports/64 REs/2 RBs = 0.5 port/RE/RB. (iii) FIG. 15 illustrates a 128-port CSI-RS with a 0.25 CSI-RS density (port/RE/RB) as an example of Option 2. In FIG. 15, the density is 128 ports/(16*8) REs/4 RBs = 0.25 port/RE/RB.

Among the plurality of CDM-X groups (e.g., X = 2, 4, 8, or 16) forming the 64-port or 128-port CSI-RS, the first set of Y CDM groups is transmitted in even-numbered PRBs, and the second set of Z CDM groups is transmitted in odd-numbered PRBs. Herein, X*(Y+Z) = P (64 or 128). In a special case of the above example, when the number of ports for CSI-RSs transmitted in each slot is the same, it may be configured that Y=Z=64/2 or 128/2 port CSI-RS.

The numbers of REs per PRB occupied by the 64-port CSI-RS and the 128-port CSI-RS are excessively high. In this regard, Proposal 2 above is a method for effectively reducing RS overhead.

While FIGS. 11 to 13 are based on the assumption that a BS indicates/configures a different CDM configuration for each PRB of different frequency/time resources, it may be considered that a CDM group configuration pattern for a single PRB is repeated as illustrated in FIG. 14 to reduce signaling/configuration overhead. The configuration in FIG. 14 means that when a CSI-RS configuration for an even-numbered (odd-numbered) PRB (a configuration/indication for four CDM-8s and a total number of CSI-RS ports (64-port CSI-RS) and/or a CSI-RS density in FIG. 14) is given, the CSI-RS pattern is repeatedly configured for an odd-numbered (even-numbered) PRB. Although this has been described based on Option 2, it may be extended to Option 1 as well.

In FIG. 11, CSI-RSs corresponding to a 1^{st} CDM-8 to a 4^{th} CDM-8 (CSI-RSs in the n^{th} slot) may correspond to one CSI-RS resource #1, and CSI-RSs corresponding to a 5^{th} CDM-8 to an 8^{th} CDM-8 (CSI-RSs in the (n+k)^{th} slot) may correspond to CSI-RS resource #2. The above example may be extended such that CSI-RS resources #1, #2, ... #N, which are aggregated to form the 64-port or 128-port CSI-RS, may be configured/transmitted in different time slots. Alternatively, the plurality of resources may be grouped, and each group may be transmitted in a different time slot. As described in Proposal 3 below, when a plurality of CSI-RSs are aggregated to form 64 ports or 128 ports and are transmitted over a plurality of slots, a single resource is configured to be transmitted within the same slot or within T slots/symbols in consideration of a channel coherence time. For example, T slots may correspond to two consecutive slots according to the embodiment where k=1 is fixed as described above. This constraint is required because when CSI-RS resources are transmitted in slots spaced far apart from each other in the time domain, the coherency property between these CSI-RS resources may not be maintained, and acquiring CSI based on the aggregation of CSI-RS resources may be inaccurate/inappropriate. On the contrary, when all CSI-RS resources are mapped within the same slot, the coherency property may be maintained. However, due to the increased number of ports (such as 64 or 128), CSI-RS overhead in the slot may become excessively large, potentially preventing other signals/channels from being transmitted or causing collisions. To compromise between overhead reduction and coherency gains, aggregated CSI-RS resources may be mapped with a smaller time domain density within a coherence time corresponding to T slots.

For example, the value of T may be configured by the BS, configured based on a coherence time, or determined by a capability report from the UE. When the value of T is determined by the coherence time, for example, it may be determined by Equation 1. [Equation 1] ${T}_{c} = \frac{1}{2 {πf}_{m}} = \frac{λ}{2 πv}$

In Equation 1, fm is a maximum Doppler spread, v is a velocity, and λ is a wavelength. Alternatively, the BS may configure the T value based on a time domain channel property (TDCP) report, which is a report of a correlation measurement value of a channel measured by the UE based on a TRS.

In FIG. 13/14, a CSI-RS density of, for example, 0.5 port/RE/RB is considered, in which the total 64 or 128 ports are repeatedly transmitted every 2 PRBs. For example, a PRB to which the 1^{st} CDM-8 to the 4^{th} CDM-8 belong has a PRB offset value of 0, and a PRB to which the 5^{th} CDM-8 to the 8^{th} CDM-8 belong has an offset value of 1. In other words, CSI-RS resources corresponding to the 1^{st} CDM-8 to the 4^{th} CDM-8 may be transmitted only in even-numbered PRBs, and CSI-RS resources corresponding to the 5^{th} CDM-8 to the 8^{th} CDM-8 may be transmitted only in odd-numbered PRBs. In this case, since both of the two consecutive PRBs are used, signaling of an additional offset is not required. However, for further RS overhead reduction, a smaller CSI-RS density (e.g., 0.25) may be considered for the configuration/indication of the 64 ports or 128 ports. In this case, it means that the 64-port or 128-port CSI-RS is repeated every 4 PRBs. For the 0.25 density, two-step PRB offset values may be required to indicate this. For example, the first PRB offset (e.g., the PRB to which the 1^{st} CDM-8 to the 4^{th} CDM-8 belong in the example of FIG. 14) is indicated as one of three values 0, 1, and 2, and the second offset (e.g., the PRB to which the 5^{th} CDM-8 to the 8^{th} CDM-8 belong in the example of FIG. 14) may be indicated as one of 1, 2, and 3. Alternatively, a method of jointly indicating two offsets, such as (0,1), (0,2), (0,3), (1,2), (1,3), and (2,3), may also be considered.

In another method for setting the CSI-RS density to 0.25, for example, in the case of 128 ports, a 32-port CSI-RS is configured with PRB offset 0, a 32-port CSI-RS with PRB offset 1, a 32-port CSI-RS with PRB offset 2, and a 32-port CSI-RS with PRB offset 3. In this case, signaling of the PRB offsets is not required, which is illustrated in FIG. 15. FIGS. 14 and 15 are generalized such that in the case of a P-port CSI-RS, as many CSI-RS ports as P * CSI-RS density are mapped to each PRB with a PRB offset of 1 to form P ports. This has the advantage that an existing CSI-RS configuration is reusable, and consequently, signaling of an RS density and a PRB offset is not required. In FIG. 14/15, CSI-RS ports configured with different PRB offsets may be distinguished by different CSI-RS resources.

As a combination of Options 1 and 2, a method for maximizing configuration flexibility by configuring different time/frequency resources may also be considered. For example, the CSI-RSs of the n^{th} slot in FIG. 11 (e.g., the PRB to which the 1^{st} CDM-8 to the 4^{th} CDM-8 belong) may be transmitted in every even-numbered PRB, and the CSI-RSs of the (n+k)^{th} slot (e.g., the PRB to which the 5^{th} CDM-8 to the 8^{th} CDM-8 belong) may be transmitted in every odd-numbered PRB.

Instead of designing a new 64-port/128-port CSI-RS, aggregating a plurality of legacy CSI-RS configurations to design a 64-port/128-port CSI-RS may be considered. For example, 64 ports may be configured by aggregating two legacy 32-port CSI-RS resources, or 128 ports may be configured by aggregating four resources. In this case, CSI-RS port indexing may also be considered for matching the aggregated CSI-RSs with codebook ports.

### Proposal 3

When a 64-port/128-port CSI-RS is configured by aggregating legacy CSI-RSs, the ports are indexed by Equation 2 below. [Equation 2] $\begin{matrix}p = 3000 + s + jL + kN , \\ j = 0 , 1 … . , N / L - 1 , \\ s = 0 , 1 , … , L - 1 , \\ k = 0 , 1 , … , K - 1 .\end{matrix}$

In Equation 2, N represents the number of CSI-RS ports per resource, K represents the number of aggregated CSI-RS resources, L∈{1,2,4,8} represents a CDM group size, and s represents a sequence index within a CDM group.

In Proposal 3, the ports are indexed by sequentially aggregating a plurality of CSI-RS resources. For example, when two 32-port CSI-RSs are aggregated, a first resource is indexed from 3000 to 3031, and a second resource is indexed from 3032 to 3063. In this case, the CSI-RS resources may be indexed (index k) in an order in which the BS configures the CSI-RS resources within a CSI-RS resource configuration, or in a lowest/highest order of CSI-RS resource ids. Alternatively, in the overhead reduction of Proposal 2, indexing may be performed in the order of the CSI-RS resources configured in the lowest/highest PRB or slot based on a reference PRB (k=0) or a reference slot n. For example, in FIG. 15, when CSI-RSs with a 1^{st} CDM-8 to a 4^{th} CDM-8 are configured in a second CSI-RS resource, CSI-RSs with a 5^{th} CDM-8 to an 8^{th} CDM-8 are configured in a first CSI-RS resource, CSI-RSs with a 9^{th} CDM-8 to a 12^{th} CDM-8 are configured in a third CSI-RS resource, and CSI-RSs with a 13^{th} CDM-8 to a 16^{th} CDM-8 are configured in a fourth CSI-RS resource, indexing is performed in the order of 2→1→3→4 CSI-RS resource. Further, the CSI-RS ports are indexed within each resource by s + jL.

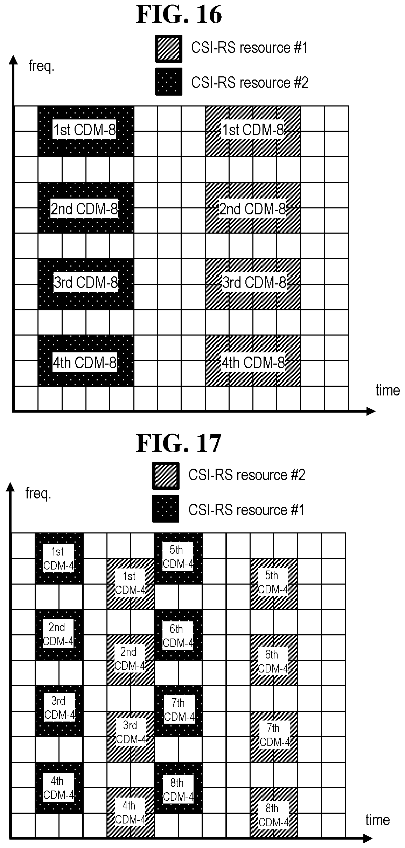

In another example, when a plurality of CSI-RS resources are configured together in one PRB, the CSI-RS ports are indexed in the order of a resource to which the lowest/highest symbol index or the lowest/highest subcarrier index belongs among the REs occupied by the CSI-RSs within each resource. In FIG. 16, CSI-RS resource #2 is indexed first, followed by CSI-RS resource #1.

In another example, port indexing may be performed in the order of CDM group indexes by reordering CDM groups into which aggregated CSI-RSs are grouped. The CDM groups are indexed by reordering them in the sequence of frequency → time. For example, in the case of FIG. 16, the 1^{st} CDM-8 to the 4^{th} CDM-8 of CSI-RS resource #2 become the 1^{st} CDM-8 to the 4^{th} CDM-8, and the 1^{st} CDM-8 to the 4^{th} CDM-8 of CSI-RS resource #1 become the 5^{th} CDM-8 to the 8^{th} CDM-8. According to the example in FIG. 17, the CDM groups are reordered in the sequence of 1^{st}-4^{th} CDM-4 of CSI-RS resource #1 → 1^{st}-4^{th} CDM-4 of CSI-RS resource #2 → 5^{th}-8^{th} CDM-4 of CSI-RS resource #1 → 5^{th}-8^{th} CDM-4 of CSI-RS resource #2. In this case, there is an advantage that the legacy equation (p = 3000 + s + jL) may be used as is. Further, in Proposal 3, when a plurality of resources have different numbers of ports, for example, when 64 ports are configured in CSI-RS resource #1 (32 ports) + CSI-RS resource #2 (16 ports) + CSI-RS resource #3 (16 ports), the above equation may be adopted as is. However, in this case, resource aggregation for port indexing may be performed in the order of the highest/lowest number of ports.

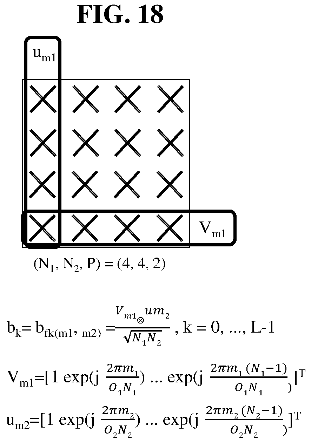

Reusing legacy CSI-RSs implies that specific CSI-RS resources are configured for legacy UEs. Since the BS has cross-pol antennas, CSI-RSs corresponding to two polarizations are transmitted within one resource, and a codebook is configured accordingly. For example, in a 32-port configuration example illustrated in FIG. 18, the first 16 ports correspond to slant "/", and the remaining 16 ports correspond to slant "/". Therefore, the codebook is also designed in a block diagonal form to apply a DFT vector for each port corresponding to each slant.

However, when Proposal 3 is followed, port indexing is performed sequentially for each CSI-RS resource. Therefore, even though CSI-RSs are actually mapped to cross-pol, they may end up being mapped only to the same slant due to the above indexing. To address this, the following port indexing is proposed.

### Proposal 3-1

When a 64-port/128-port CSI-RS is configured by aggregating legacy CSI-RSs, the ports are indexed by Equation 3 below. [Equation 3] $\begin{matrix}p = 3000 + s + \left(j mod\frac{N}{2 L}\right) ⋅ L + \frac{KN}{2} ⋅ \left⌊\frac{2 L}{N}j\right⌋ , \\ j = 0 , 1 … . , \frac{N}{L} - 1 , \\ s = 0 , 1 , … , L - 1 , \\ k = 0 , 1 , … , K - 1\end{matrix}$

In Equation 3, aggregated CSI-RS resources may be ordered (index k) by adopting the method of Proposal 3 as is.

According to Equation 3, half of the ports within the aggregated CSI-RS resources are mapped to slant "/", and the remaining ports are mapped to slant "\".

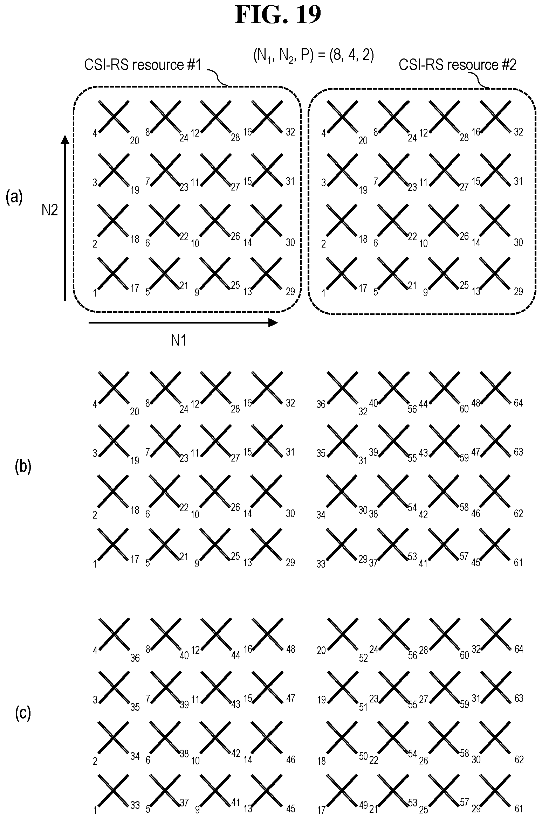

FIG. 19 illustrates examples of a 64-port CSI-RS configuration and port indexing by aggregating two legacy 32-port CSI-RSs. In FIG. 19, (a) represents a 64-port CSI-RS configured by aggregating two legacy 32-port CSI-RSs, (b) represents port indexing according to Proposal 3, and (c) represents port indexing according to Proposal 3-1. FIG. 19 illustrates that each legacy CSI-RS supports a legacy 32-port UE, under the assumption that legacy UEs are also simultaneously supported. When only a legacy CSI-RS configuration is reused and actual port mapping is performed such that CSI-RS resource #1 is mapped to slant "/" and CSI-RS resource #2 is mapped to slant "\", the result of Proposal 3 is as illustrated in FIG. 19(c). Additionally, a port indexing method may be selectively used depending on a CSI reporting quantity or a codebook structure. For example, Proposal 3 is easy to apply when a plurality of CSI-RS resource indicators (CRIs) are selected from a plurality of CSI-RS resources and CSI (e.g., RI/CQI/PMI) is reported for each resource, or for a multi-panel codebook, whereas Proposal 3-1 is easy to apply to a single-panel codebook including a 64-port or 128-port CSI-RS.

Further, Proposal 3-1 is generalized to extend to a case where a plurality of resources have different numbers of ports, resulting in Equation 4. [Equation 4] $\begin{matrix}p = 3000 + {s}_{k} + \left({j}_{k} mod\frac{{N}_{k}}{2 L}\right) ⋅ {L}_{k} + \frac{{\sum }_{k = 0}^{K - 1} {N}_{k}}{2} ⋅ \left⌊\frac{2 L}{N}{j}_{k}\right⌋ , \\ {j}_{k} = 0 , 1 … . , \frac{{N}_{k}}{{L}_{k}} - 1 , \\ {s}_{k} = 0 , 1 , … , {L}_{k} - 1 , \\ k = 0 , 1 , … , K - 1\end{matrix}$

∑ₖ₌₀^{K-1}Nₖ= P(64/128 port). Further, although Equation 4 generalizes Proposal 3-1 by assuming a different CDM size for each resource, CDM sizes may be restricted to be the same across CSI-RS resources because different CDM sizes may cause power imbalance between ports.

Additionally, when a multi-panel CSI codebook is designed, constraints may be imposed such that ports belonging to the same panel are included in the same CDM group and/or the same CSI-RS resource, while ports belonging to different panels are included in different CDM groups and/or different CSI-RS resources. Similarly, when single-panel ranks 3 and 4 are designed, two port sub-groups are considered within one panel, and based on the same principle as above, constraints may be imposed such that ports in the same sub-group are included in the same CDM group and/or CSI-RS resource.

In the above proposal, when single or multiple CSI-RS resources overlap with other signals/channels while being transmitted in TDM across multiple slots or in FDM across multiple PRBs, a problem arises regarding how to resolve collisions. A resource collision refers to a case where some or all of the time/frequency resources of one resource overlap. The following methods are proposed for collision handling.
# When some of resources forming a 64/128 CSI-RS collide with a signal/channel (e.g., SSB, CORESET, or DM-RS) of a higher priority than the CSI-RS:
   (1) Method 1: Drop the entire 64/128-port CSI-RS.
      Even when a plurality of CSI-RS resources are aggregated to form the 64/128-port CSI-RS, all of the plurality of resources are dropped.
   (2) Method 2: Among a plurality of resources forming the 64/128-port CSI-RS, drop all ports within an overlapping resource.
      For example, when two resources are aggregated to form 64 ports (e.g., 32+32) and ports corresponding to a second 32-port CSI-RS resource overlap, those 32 ports are dropped, and only the remaining 32-port CSI-RS is transmitted. In this case, even if the UE is configured with 64 ports, it performs reporting for the 32-port CSI-RS. The UE may determine that specific ports are dropped based on a predefined priority rule, or the BS may indicate to the UE whether the drop has occurred by a separate indication.
   (3) Method 3: Among a plurality of resources forming the 64/128-port CSI-RS, an overlapping resource is transmitted by performing a time domain and/or frequency domain shift.
      Among CSI-RS resources forming single or multiple 64/128-port CSI-RSs, colliding resources are agreed to be transmitted by shifting them on the time axis or frequency axis (based on a predefined rule). Whether the shift is by C symbols/slots and/or D REs/RBs on the time/frequency axis may be configured by the BS. Alternatively, it may be determined to be located within the aforementioned coherence time.
   (4) Method 4: The UE does not expect configured/transmitted CSI-RS resources to collide with a channel/signal of a higher priority than a CSI-RS. Further, when a plurality of CSI-RS resources are aggregated to form a 64-port or 128-port CSI-RS, the UE does not expect a collision for each resource. For example, the plurality of CSI-RS resources are not configured/indicated to overlap with each other within time/frequency resources.

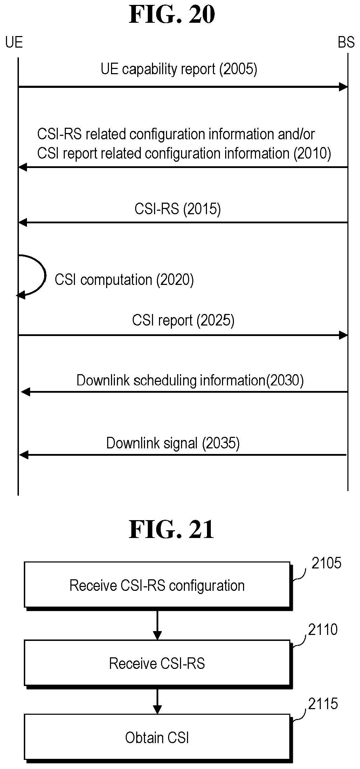

FIG. 20 illustrates an exemplary operational procedure between a BS and a UE, for Proposal 1/2/3/3-1. In FIG. 20, some UE/BS operations may be omitted.

Referring to FIG. 20, the UE may transmit a UE capability report to the BS, including the number of supportable CSI-RS ports and the total number of simultaneously supportable CSI-RS ports (2005).

The UE may receive CSI-RS-related configuration information and CSI reporting-related configuration information from the BS (2010).

The UE may receive a CSI-RS from the BS (2015) and measure/estimate/calculate CSI based on the CSI-RS (2020).

The UE may report the measured/estimated/calculated CSI to the BS (2025).

The UE may receive scheduling information (e.g., DCI) for a DL channel (e.g., PDCCH or PDSCH) from the BS (2030).

The UE may receive a DL channel/signal transmitted by the BS (2035).

FIG. 21 is a flowchart illustrating a method performed by a UE according to an embodiment.

Referring to FIG. 21, the UE may receive a CSI-RS configuration through higher-layer signaling (2105).

The UE may receive a CSI-RS based on the CSI-RS configuration (2110).

The UE may obtain CSI based on the CSI-RS (2115).

The CSI-RS may be provided through P antenna ports, where P may be an integer greater than 32 and not larger than 128.

The CSI-RS configuration may include a configuration for a plurality of CSI-RS resources related to the P antenna ports.

The configuration for the plurality of CSI-RS resources may include information regarding a slot offset value of each CSI-RS resource.

The plurality of CSI-RS resources for the CSI-RS may be mapped within a time period corresponding to T slots based on the slot offset value.

The T slots may be two consecutive slots.

P may be 64 or 128.

Each CSI-RS resource may be mapped to one of the two slots based on the slot offset value.

The CSI may be obtained based on an aggregation of CSI-RS resources mapped to a first slot of the two slots and CSI-RS resources mapped to a second slot of the two slots.

The slot offset value may be 0 or 1.

A density of the CSI-RS, determined based on the number P of antenna ports, the number of REs, and the number of RBs for the CSI-RS, may be 0.5.

Each CSI-RS resource may be mapped to one of an even-numbered PRB and an odd-numbered PRB in a frequency domain.

Among the plurality of CSI-RS resources, a first CSI-RS resource may be mapped to an even-numbered PRB of a first slot among the T slots, and a second CSI-RS resource may be mapped to an odd-numbered PRB of a second slot among the T slots.

The UE may not expect the plurality of CSI-RS resources to collide with another signal having a higher priority than the CSI-RS.

The CSI-RS may be an aperiodic CSI-RS.

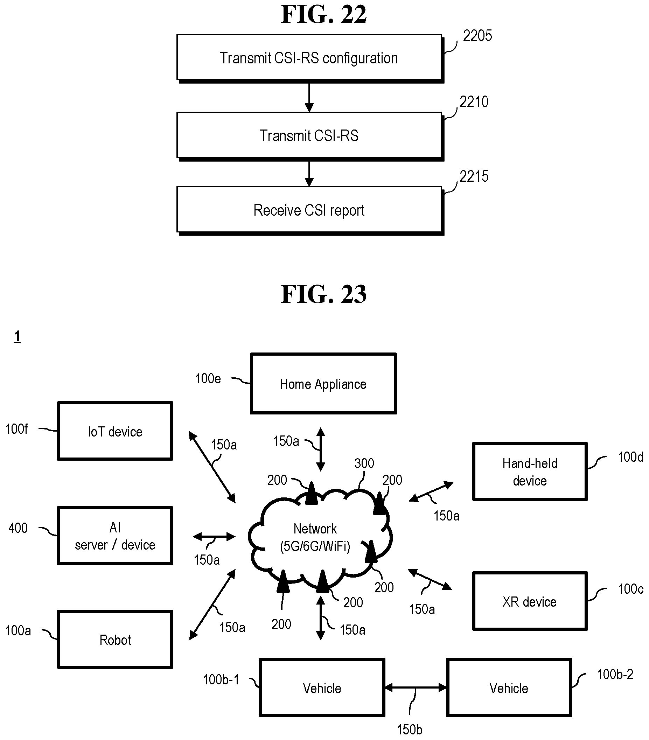

FIG. 22 is a flowchart illustrating a method performed by a BS according to an embodiment.

Referring to FIG. 22, the BS may transmit a CSI-RS configuration to a UE through higher-layer signaling (2205).

The BS may transmit a CSI-RS to the UE based on the CSI-RS configuration (2210).

The BS may receive a CSI report from the UE (2215).

The CSI-RS may be provided through P antenna ports, where P may be an integer greater than 32 and not larger than 128.

The CSI-RS configuration may include a configuration for a plurality of CSI-RS resources related to the P antenna ports.

The configuration for the plurality of CSI-RS resources may include information regarding a slot offset value of each CSI-RS resource.

The plurality of CSI-RS resources for the CSI-RS may be mapped within a time period corresponding to T slots based on the slot offset value.

The T slots may be two consecutive slots.

P may be 64 or 128.

Each CSI-RS resource may be mapped to one of the two slots based on the slot offset value.

The CSI report may include CSI obtained based on an aggregation of CSI-RS resources mapped to a first slot of the two slots and CSI-RS resources mapped to a second slot of the two slots.

The slot offset value may be 0 or 1.

A density of the CSI-RS, determined based on the number P of antenna ports, the number of REs, and the number of RBs for the CSI-RS, may be 0.5.

Each CSI-RS resource may be mapped to one of an even-numbered PRB and an odd-numbered PRB in a frequency domain.

Among the plurality of CSI-RS resources, a first CSI-RS resource may be mapped to an even-numbered PRB of a first slot among the T slots, and a second CSI-RS resource may be mapped to an odd-numbered PRB of a second slot among the T slots.

The BS may schedule the plurality of CSI-RS resources not to collide with another signal having a higher priority than the CSI-RS.

The CSI-RS may be an aperiodic CSI-RS.

FIG. 23 illustrates a communication system 1 applied to various embodiments.

Referring to FIG. 23, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

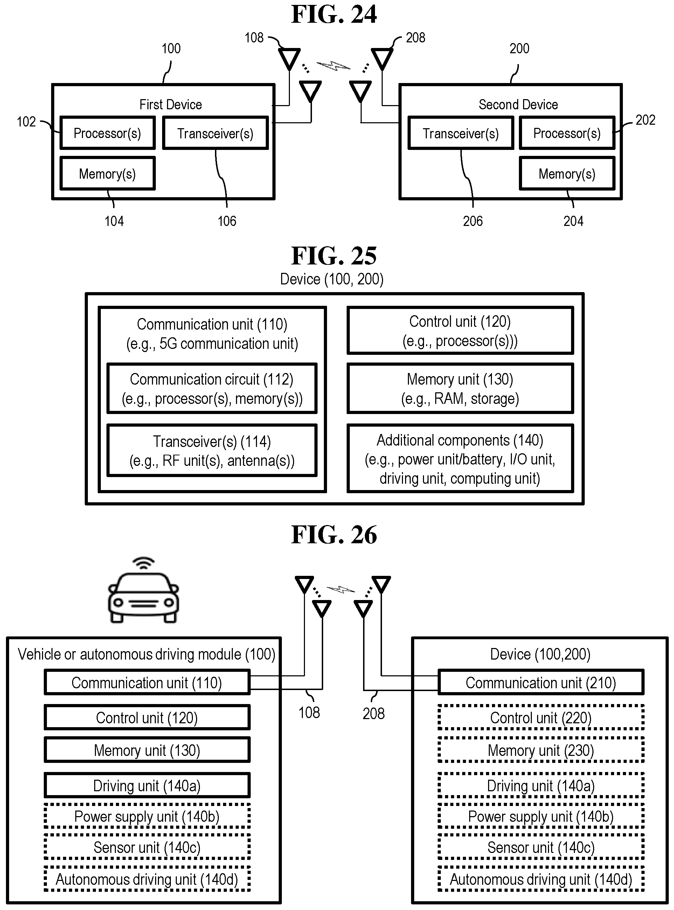

FIG. 24 illustrates wireless devices applicable to the various embodiments.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in the present disclosure. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in the present disclosure. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in the present disclosure. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in the present disclosure. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in the present disclosure. The one or more processors 102 and 202 may generate messages, control information, data, or information according to the descriptions, functions, procedures, proposals, methods, and/or operational flowcharts disclosed in the present disclosure. The one or more processors 102 and 202 may generate signals (e.g., baseband signals) including PDUs, SDUs, messages, control information, data, or information according to the descriptions, functions, procedures, proposals, methods, and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in the present disclosure may be implemented using firmware or software and the firmware or software may be configured to include the modules, procedures, or functions. Firmware or software configured to perform the descriptions, functions, procedures, proposals, methods, and/or operational flowcharts disclosed in the present disclosure may be included in the one or more processors 102 and 202 or stored in the one or more memories 104 and 204 so as to be driven by the one or more processors 102 and 202. The descriptions, functions, procedures, proposals, methods, and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the descriptions, functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 25 illustrates another example of a wireless device applied to the present disclosure. The wireless device may be implemented in various forms according to a use-case/service (refer to FIG. 23).

Referring to FIG. 25, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 26 illustrates a vehicle or an autonomous driving vehicle applicable to various embodiments. The vehicle or autonomous driving vehicle may be implemented by a mobile robot, a car, a train, a manned/unmanned Aerial Vehicle (AV), a ship, etc.

Referring to FIG. 26, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. In addition, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. In addition, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### INDUSTRIAL APPLICABILITY

The present disclosure is applicable to UEs, BSs, or other apparatuses in a wireless mobile communication system.

## Claims

1. A method performed by a user equipment (UE), comprising:
receiving a channel state information-reference signal (CSI-RS) configuration through higher layer signaling;
receiving a CSI-RS based on the CSI-RS configuration; and
obtaining CSI based on the CSI-RS,
wherein the CSI-RS is provided through P antenna ports where P is an integer greater than 32 and not larger than 128,
wherein the CSI-RS configuration includes a configuration for a plurality of CSI-RS resources related to the P antenna ports,
wherein the configuration for the plurality of CSI-RS resources includes information regarding a slot offset value of each CSI-RS resource, and
wherein the plurality of CSI-RS resources are mapped within a time period corresponding to T slots based on the slot offset value.

2. The method of claim 1, wherein the T slots are two consecutive slots, and
wherein P is 64 or 128.

3. The method of claim 2, wherein each CSI-RS resource is mapped to one of the two slots based on the slot offset value.

4. The method of claim 3, wherein the CSI is obtained based on an aggregation of CSI-RS resources mapped to a first slot of the two slots and CSI-RS resources mapped to a second slot of the two slots.

5. The method of claim 3, wherein the slot offset value is 0 or 1.

6. The method of claim 1, wherein a density of the CSI-RS, which is determined based on the number P of antenna ports, the number of resource elements (REs), and the number of resource blocks (RBs) for the CSI-RS, is 0.5, and
wherein each of the CSI-RS resources is mapped to one of an even-numbered physical resource block (PRB) and an odd-numbered PRB in a frequency domain.

7. The method of claim 6, wherein a first CSI-RS resource among the plurality of CSI-RS resources is mapped to an even-numbered PRB of a first slot among the T slots, and a second CSI-RS resource is mapped to an odd-numbered PRB of a second slot among the T slots.

8. The method of claim 1, wherein the UE does not expect the plurality of CSI-RS resources to collide with another signal having a higher priority than the CSI-RS.

9. The method of claim 1, wherein the CSI-RS is an aperiodic CSI-RS.

10. A non-transitory computer-readable recording medium recording instructions for performing the method of claim 1.

11. An apparatus comprising:
a memory storing instructions; and
a processor performing operations by executing the instructions,
wherein the operations of the processor include:
receiving a channel state information-reference signal (CSI-RS) configuration through higher layer signaling;
receiving a CSI-RS based on the CSI-RS configuration; and
obtaining CSI based on the CSI-RS,
wherein the CSI-RS is provided through P antenna ports where P is an integer greater than 32 and not larger than 128,
wherein the CSI-RS configuration includes a configuration for a plurality of CSI-RS resources related to the P antenna ports,
wherein the configuration for the plurality of CSI-RS resources includes information regarding a slot offset value of each CSI-RS resource, and
wherein the plurality of CSI-RS resources are mapped within a time period corresponding to T slots based on the slot offset value.

12. The apparatus of claim 11, further comprising a transceiver,
wherein the apparatus is a user equipment (UE) operating in a wireless communication system.

13. The apparatus of claim 11, wherein the apparatus is a processing device configured to control a UE operating in a wireless communication system.

14. A method performed by a base station (BS), comprising:
transmitting a channel state information-reference signal (CSI-RS) configuration to a user equipment (UE) through higher layer signaling;
transmitting a CSI-RS to the UE based on the CSI-RS configuration; and
receiving a CSI report from the UE,
wherein the CSI-RS is provided through P antenna ports where P is an integer greater than 32 and not larger than 128,
wherein the CSI-RS configuration includes a configuration for a plurality of CSI-RS resources related to the P antenna ports,
wherein the configuration for the plurality of CSI-RS resources includes information regarding a slot offset value of each CSI-RS resource, and
wherein the plurality of CSI-RS resources are mapped within a time period corresponding to T slots based on the slot offset value.

15. A base station (BS) comprising:
a memory storing instructions; and
a processor performing operations by executing the instructions,
wherein the operations of the processor include:
transmitting a channel state information-reference signal (CSI-RS) configuration to a user equipment (UE) through higher layer signaling;
transmitting a CSI-RS to the UE based on the CSI-RS configuration; and
receiving a CSI report from the UE,
wherein the CSI-RS is provided through P antenna ports where P is an integer greater than 32 and not larger than 128,
wherein the CSI-RS configuration includes a configuration for a plurality of CSI-RS resources related to the P antenna ports,
wherein the configuration for the plurality of CSI-RS resources includes information regarding a slot offset value of each CSI-RS resource, and
wherein the plurality of CSI-RS resources are mapped within a time period corresponding to T slots based on the slot offset value.
